## Europäisches Patentamt
## European Patent Office
## Office européen des brevets

(19)

(11) Publication number: **0 026 080**

**A1**

(12) # EUROPEAN PATENT APPLICATION

(21) Application number: **80303235.8**

(22) Date of filing: **15.09.80**

(51) Int. Cl.³: **B 60 Q 1/44**

(30) Priority: **13.09.79 ZA 794873**
**10.03.80 ZA 801393**

(43) Date of publication of application:
**01.04.81 Bulletin 81/13**

(84) Designated Contracting States:
**AT BE CH DE FR GB IT LI LU NL SE**

(71) Applicant: **Coxon, Colin**
**Diamond Valley Motel**
**Mbabane(SZ)**

(72) Inventor: **Coxon, Colin**
**Diamond Valley Motel**
**Mbabane(SZ)**

(74) Representative: **Harrison, David Christopher et al,**
**MEWBURN ELLIS & CO 70 & 72 Chancery Lane**
**London WC2A 1AD(GB)**

(54) Safety accessory for vehicles.

(57) Mechanism (20) for actuating an indicating means such as a stop light to indicate that the vehicle is slowing down, the mechanism (20) being connectible to control means (16) of the engine of the vehicle and being responsive to the operation of the control means (16) to reduce the supply of energy to the engine, or alternatively connectible to the engine and being responsive to the speed of the engine.

FIG. 1

SAFETY ACCESSORY FOR VEHICLES

THIS INVENTION relates to a safety accessory for vehicles, particularly powered road vehicles. More particularly the invention relates to a mechanism for actuating an indicating means of the vehicle.

According to the invention there is provided a safety accessory for a vehicle, the accessory including a mechanism for actuating an indicating means of a vehicle having an engine, the mechanism being connectable to the engine and to the indicating means and being responsive to the speed of the engine thereby to actuate the indicating means of the vehicle upon a decrease in the speed of the engine to indicate to persons outside the vehicle that the vehicle is slowing down.

Further according to the invention there is provided a safety accessory for a vehicle, the accessory including a mechanism for actuating an indicating means of a vehicle having an engine, the mechanism being connected to a control means of the engine and to the indicating means, such that the indicating means is actuated when the control means is operated to decrease the supply of energy to the engine thereby to indicate to persons outside the vehicle that the vehicle is slowing down.

The mechanism may conveniently be electrically operable. Accordingly, the indicating means may be an electrical lamp or lamps mounted on the vehicle to be externally visible. These lamps may be the conventional stop lamps of the vehicle, or other similar lamps, such as the turn indicating lamps. In one arrangement, the mechanism may include an electrical switch mountable on the engine and electrically connectable between an electrical power source and the lamps.

The switch may be pneumatically, hydraulically, or mechanically connected to the engine or its control means. With a petrol driven engine having a carburettor, the switch may be mounted so that it is closed by the closing of the control valve of the carburettor. Thus, the control means may be the control valve of the carburettor which is operable by the fuel supply pedal and its associated linkage.

The invention will now be described by way of an example, with reference to the accompanying drawings, in which:

Figure 1 shows a schematic side view of a carburettor of an engine for a vehicle with an electrically operable mechanism according to the invention mounted thereon; and

Figure 2 shows a circuit diagram of the interconnection of the mechanism of Figure 1 with lamps of the vehicle.

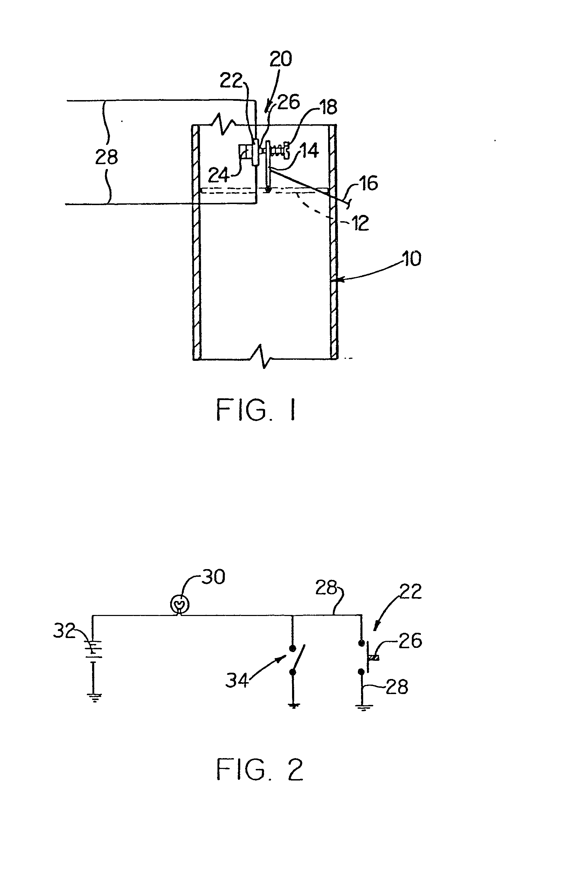

Referring to Figure 1, the barrel of a carburettor is shown by reference numeral 10. The carburettor is not otherwise shown. The carburettor is attached to, and controls a petrol engine which drives a road vehicle, the engine and the vehicle not being shown in the drawings.

The carburettor has a butterfly valve 12 which is operated by a lever arm 14 via a cable 16 attached to the fuel supply pedal of the vehicle. The idling position of the butterfly valve 12 is varied by means of a screw 18 mounted in the arm 14.

A mechanism 20 for actuating stop lamps of the vehicle is mounted on the carburettor. The mechanism 20 comprises an electrical micro-switch 22 fast with a mounting bracket 24 provided on the barrel 10. The switch 22 is disposed so that its depressible operating pin 26 is engaged by the screw 18. The switch 22 is normally open, its contacts being bridged when the pin 26 is depressed. The switch 22 is connected between the battery of the vehicle and its stop lamps by means of wires 28, as is shown in Figure 2.

Referring to Figure 2, the switch 22 is shown connected between the stop lamps 30 and the earth pole of the vehicle's battery 32. The switch 22 is in parallel with a switch 34 which is the conventional switch operated by activating the braking means of the vehicle. The stop lamps 30 may be the conventional stop lamps of the vehicle or an additional lamp or lamps mounted in an easily visible position such as in the rear window of the vehicle. The lamps may display the word 'CAUTION' when actuated.

In use, the switch 22 is mounted on the carburettor to be operated by the lever arm 14 and is electrically interconnected with the stop lamps 30. When the fuel supply pedal of the vehicle is released the cable 16 closes the butterfly valve 12, reducing the flow of petrol to the engine and causing it to slow down. Due to the braking effect of the engine, the speed of the vehicle decreases. As the valve 12 closes, the screw 18 engages the pin 26, thereby actuating the lamps 30 and indicating to persons following the vehicle that the speed of the engine has decreased and that the vehicle will be slowing down. This indication is given as soon as the fuel supply pedal is released and before the brakes of the vehicle are applied.

0026080

CLAIMS

1.  A safety accessory for a vehicle, the accessory including a mechanism for actuating an indicating means of a vehicle having an engine, the mechanism being connectable to the engine or a control means therefor and to the indicating means and being responsive to the speed of the engine thereby or the condition of the control means to actuate the indicating means of the vehicle upon a decrease in the speed of the engine or upon alteration of the control means to cause such a decrease to indicate to persons outside the vehicle that the vehicle is slowing down.

2.  A safety accessory according to claim 1, in which the mechanism is connectable to a control means of the engine and to the indicating means, such that the indicating means is actuated when the control means is operated to decrease the supply of energy to the engine.

3.  A safety accessory according to claim 2, in which the engine has a carburettor and the control means is the control valve of the carburettor operable by the fuel supply pedal and its associated linkage.

4.  A safety accessory according to any one of the preceding claims, in which the mechanism is electrically operable.

5.  A safety accessory according to claim 4, in which the mechanism includes an electrical switch mountable on the engine and electrically connectable between an electrical power source and the indicating means.

6.  A safety accessory according to claim 5, in which the switch is normally open and is closed when the control means is operated by releasing the fuel supply pedal.

7.  A safety accessory according to any one of the preceding claims in which the indicating means includes an electrical lamp.

FIG. 1

FIG. 2

# EUROPEAN SEARCH REPORT

European Patent Office

Application number

EP 80 30 3235

| Category | Citation of document with indication, where appropriate, of relevant passages | Relevant to claim |
|---|---|---|
| X | US - A - 2 650 963 (GRAVENO)<br>* Figure 1; column 1, line 52 - column 3, line 11 * | 1-7 |
| | -- | |
| X | US - A - 3 236 962 (SCHLITZ)<br>* Figure 1, column 1, line 40 - column 2, line 25 * | 1-7 |
| | -- | |
| X | GB - A - 1 098 817 (PHARNACEUTICAL PLASTICS LTD)<br>* Figures 4,5 * | 1-7 |
| | -- | |
| X | NL - A - 65 16057 (BARTHOLOMEUS)<br>* Figures 1,2 * | 1-7 |
| | -- | |
| X | FR - A - 2 225 007 (JOLY)<br>* Figures 1,2 * | 1-7 |
| | -- | |
| X | US - A - 3 522 582 (TUTTLE)<br>* Figures 1-4 * | 1-7 |
| | -- | |
| X | US - A - 2 734 105 (PERRY)<br>* Figures 1,2 * | 1-7 |
| | -- | |
| | US - A - 3 439 325 (LECHSENRING)<br>* Figure 1 * | 1-7 |

## DOCUMENTS CONSIDERED TO BE RELEVANT

### CLASSIFICATION OF THE APPLICATION (Int. Cl.³)

B 60 Q 1/44

### TECHNICAL FIELDS SEARCHED (Int. Cl.³)

B 60 Q 1/44

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-11-1980 | ONILLON |

EPO Form 1503.1 06.78